# EUROPÄISCHE PATENTANMELDUNG

(11) **EP 1 214 968 A2**
(43) Veröffentlichungstag der Anmeldung: **19.06.2002**
(21) Anmeldenummer: 01126770.5
(22) Anmeldetag: 09.11.2001
(51) Int. Cl.: B01F 3/04

(54) **Vorrichtung zum Belüften von Wasser**

(30) Priorität: 10.11.2000 DE 10055785
(71) Anmelder: GUMMI-JÄGER KG GMBH & CIE, D-30625 Hannover (DE)
(72) Erfinder: Jäger, Andreas, Dr., 30559 Hannover (DE); Edel, Volker, Dr., 30916 Isernhagen (DE)
(74) Vertreter: RA Depmeyer, Jochen

(57) **Zusammenfassung**

Die Erfindung betrifft eine Vorrichtung zum Belüften von Wasser mit einem Sützkörper (1) und einem darauf befindlichen, geschlitzten Mantel (4) aus Gummi od. dgl.. Um den Reibungswiderstand für die in das Wasser einzubringende Luft zu verringern und damit einem zu hohen Druckverlust vorzubeugen, ist erfindungsgemäss ein Stützkörper (1) vorgesehen der stark unterschiedliche Seitenlängen (S1,S2) hat, und zwar so, dass die längeren Seiten (S2) senkrecht stehen. Vorzugsweise soll ein brettartiger, flach rechteckiger, aufrecht stehender Stützkörper (1) benutzt werden.

## Beschreibung

Die Erfindung betrifft eine langgestreckte Vorrichtung zum fein- und grobblasigen Belüften von Wasser mit einem sich im wesentlichen über die Länge der Vorrichtung erstreckenden Stützkörper für eine diesen eng umschliessenden, aus Gummi oder gummiähnlihen Stoffen bestehenden schlauchförmigen Mantel mit unter der Wirkung vorgespannter Luft sich öffnenden Schlitzen in grosser Anzahl, die über den Umfang des Mantels verteilt sind.

Bei den bekannten Vorrichtungen dieser Ausbildung ist der Stützkörper ein Rohr, dessen Hohlraum zur Vermeidung eines ungewünschten Auftriebs geflutet sein kann. Beim Beschicken einer solchen Vorrichtung mit vorgespannter Luft bildet sich zwischen Stützkörper und Mantel ein mit der vorgespannten Luft gefüllter Bereich mit kreisringringförmigem Querschnitt, der insg. einen vergleichsweise großen Reibungswiderstand für die Luft und damit einen entsprechend großen Druckverlust zur Folge hat. Zudem besteht bei diesen Vorrichtungen die Gefahr, dass sich aus den unten gelegenen Schlitzen austretende Luftbläschen zu grösseren Blasen zusammenschliessen. Dadurch wird die Belüftung beeinträchtigt.

Diese Nachteile sollen durch die Erfindung beseitigt, zumindest jedoch in ihrer Wirkung erheblich vermindert werden.

Zur Lösung dieser Aufgabe ist erfindungsgemäß ein Stützkörper mit stark unterschiedlichen Seitenlängen und zumindest im wesentlichen senkrecht angeordneten längeren Seiten vorgesehen, wobei zweckmässigerweise für den Stützkörper ein zumindest im wesentlichen flach rechteckiger, brettartiger Querschnitt gewählt wird, dessen längere Seiten im Sinne der Erfindung zumindest praktisch senkrecht angeordnet sind. Dabei kann das Seitenverhältnis etwa 1 : 3 bis 1 : 15, vorzugsweise 1 : 10, betragen.

Ein so ausgeführter Stützkörper mit eng und faltenfrei anliegendem Mantel verhindert aufgrund seines Querschnitts Durchbiegungen durch den Auftrieb. Es sind daher Vorrichtungslängen von mehr als vier Meter möglich. Zudem bildet sich bei einer Druckluftbeaufschlagung durch Auswölbung des Mantels kein im Querschnitt kreisringförmiger, sondern ein im wesentlichen kreissegmentartiger Hohlraum zu beiden Seiten des Stützkörpers, wodurch sich der Reibungswiderstand für die durchfliessende Luft vermindert. Ausserdem bildet sich im Wirkzustand des Mantels ein etwa ovaler Mantelquerschnitt, der im unteren Teil einen Zusammenschluss kleiner Bläschen zu grösseren Blasen weitgehend unterbindet.

Die erfindungsgemässe Vorrichtung eröffnet auch die Möglichkeit, eine großblasige Belüftung durchzuführen. Es können nämlich ohne große Druckverluste grössere Luftmengen transportiert werden. Versuche haben gezeigt, dass sehr flache Druckverlustkennlinien für Volumenstrombereiche von etwa 2 - 30 m³/h (und pro Meter der Vorrichtungslänge) entstehen.

Die zum Anschluss der Vorrichtung erforderlichen Armaturen können an sich beliebig gestaltet werden. Vorteilhafterweise werden dabei jedoch die Stützkörper über eine vorzugsweise lösbare Steckverbindung mit den Armaturen verbunden, die ihrerseits auch Umfangsnuten zur Aufnahme der Schlauchschellen erhalten können, mit denen die Mäntel aussen auf den Armaturen festgeklemmt werden.

Es sei erwähnt, dass die Erfindung nicht an geometrisch genaue Rechteckformen der Stützkörper gebunden ist. So können die Kanten oder Ecken auch gebrochen bzw. stark abgerundet sein oder die Seitenflächen leicht gekrümmt bzw. ausgewölbt sein.

Weitere Einzelheiten der Erfindung werden anhand der Zeichnung erläutert, in der Ausführungsbeispiele der Erfindung dargestellt sind. Es zeigen :
Fig. 1 eine langgestreckte Vorrichtung zum Belüften von Abwasser od. dgl. im Längsschnitt,
Fig. 2 eine Teildraufsicht auf einen geschlitzten Mantel für die Vorrichtung gemäss Fig. 1,
Fig. 3 einen Schnitt nach der Linie III - III von Fig. 1,
Fig. 4 einen Schnitt nach der Linie IV - IV von Fig. 1 - unter Verzicht auf eine Darstellung des Mantels und einer darauf befindliche Schelle - und
Fig. 5 eine Teildraufsicht auf eine auf dem Grund eines Wasserbeckens montierte Belüftungsanlage unter Verwendung von Vorrichtungen gemäss Fig. 1,
Fig. 6 eine der Fig. 3 entsprechende Darstellung eines Stützkörpers in abgwandelter Form, wobei die linke Hälfte der Fig. den Betriebszustand und die rechte Hälfte den Ruhezustand wiedergibt,
Fig. 7 eine Draufsicht auf den Endbereich eines Stützkörpers mit Armatur,
Fig. 8 eine Seitenansicht zu Fig. 7 und
Fig. 9 eine Ansicht in Richtung des Pfeiles IX gemäß Fig. 8 gesehen.

Die Vorrichtung besteht im wesentlichen aus einem brettartigen, steifen, z.B. aus einem harten Kunststoff gefertigten Stützkörper 1, zwei am Ende der Vorrichtung befindlichen Armaturen 2, 3 und einem schlauchartigen, aus Gummi od. dgl. gefertigten, den Stützkörper 1 im nicht mit Luft beaufschlagten Zustand eng umschliessenden, schlauchförmigen, faltenfreien Mantel 4, dessen Innendurchmesser praktisch dem Aussendurchmesser D der Armaturen 2, 3 bzw. dem doppelten Maß aus der Summe der Seitenlängen S1 plus S2 entspricht.

Über den grössten Teil der Länge der Vorrichtung - Wirklänge W im Bereich der Seitenlänge S2 des Stützkörpers 1 - ist der Mantel 4 mit einer Vielzahl kleiner Schlitze 5 versehen, die sich beim Einleiten vorgespannter Luft zwischen Stützkörper 1 und Mantel 4 öffnen und kleine Bläschen in das Wasser abgeben, sich aber wieder schliessen, wenn der Innendruck absinkt bzw. entfällt.

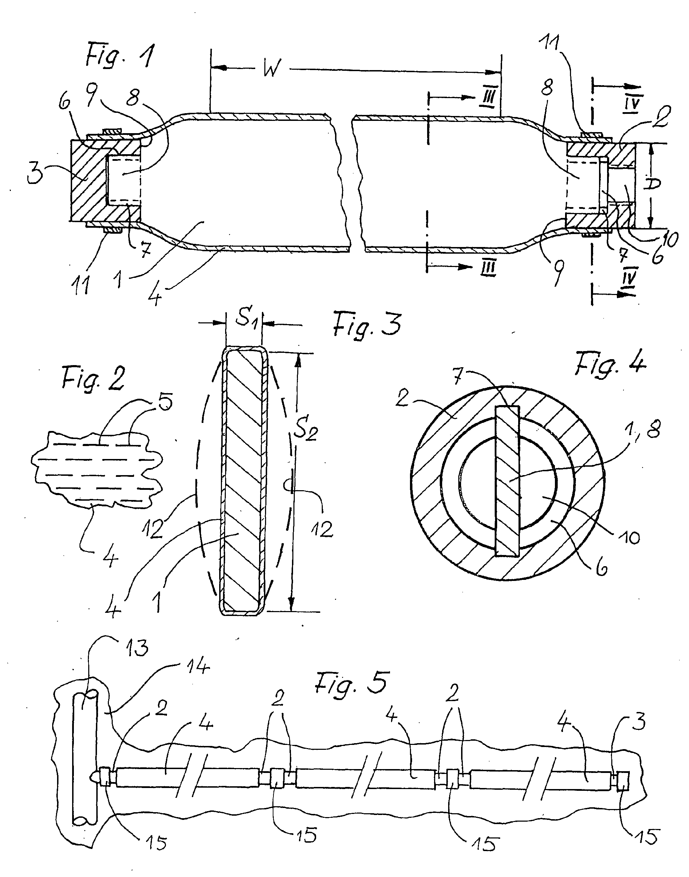

Die beiden Armaturen 2, 3 weisen an ihrer dem Stützkörper 1 zugekehrten Seite runde Ausnehmungen 6 auf, die an diametral gegenüber liegender Stelle Längsnuten 7 aufweisen. In die Ausnehmungen 6 greifen lappenartigen Fortsätze 8 an den Enden der Stützkörper 1 lösbar ein. Zur Verdrehsicherung sind die Ränder der Fortsätze 8 in den Längsnuten 7 angeordnet. Die innen gelegenen Stirnseiten der Armaturen, 2, 3 liegen fest an einer durch Stufung gebildeten Stirnfläche 9 des Stützkörpers 1 an. Im übrigen geht auch gemäß Fig. 1 der Aussendurchmesser D der Armaturen 2, 3 allmählich in das Seitenlängenmaß S2 über.

Während die Armatur 3 einen luftdichten Abschluss bildet, ist die Armatur 2 mit einer Gewindebohrung 10 versehen, um dort Luftzuführungsrohre od. dgl. anschliessen zu können.

Die Enden des Mantels 4 werden durch Schellen 11 auf den Armaturen 2, 3 festgeklemmt. Zur Absicherung können diese aussen noch mit Umfangsnuten versehen sein, in die der Mantel 4 unter der Wirkung der Schellen 11 hineingezogen werden kann, um so eine auch zugfeste Verbindung zwischen den Armaturen 2, 3 und dem Mantel 4 herzustellen und die Steckverbindung zwischen den Armaturen 2, 3 und dem Stützkörper 1 abzusichern.

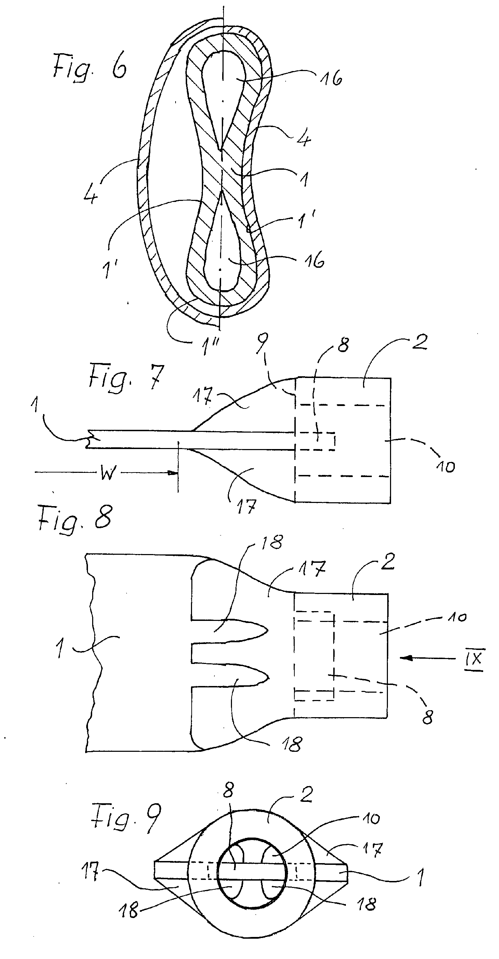

Wie aus Fig. 3 ersichtlich ist der Stützkörper 1 senkrecht stehend ( die längere Seite mit der Länge S2 steht zumindest in etwa senkrecht ) angeordnet. Dadurch ergibt sich in Bezug auf die Senkrechte ein steifer Träger, der Durchbiegungen aufgrund des Auftriebs im Wasser unterbindet. Zudem bilden sich beim Einleiten vorgespannter Luft über die Bohrung 10 zu beiden Seiten des Stützkörpers 1 vergleichsweise großvolumige, in etwa kreissegmentförmige Druckräume, die den Reibungsverlust bzw. Druckverlust verringern. Die sich bildenden Auswölbungen sind durch gestrichelte Linien 12 gekennzeichnet. Im unteren Teil des Querschnitts bzw. am unteren Rand des Stützkörpers 1 austretende Luftblasen können sich praktisch nicht zu grösseren Blasen vereinigen.

Die Biegesteifigkeit der Vorrichtung ermöglicht auch eine Aneinanderreihung mehrerer Vorrichtungen unter Bildung von Strängen erheblicher Länge, wie dies aus Fig. 5 erkennbar ist. So können die Stränge z.B. einseitig durch eine Sammelleitung 13 gespeist werden. Eine Verankerung am Grund 14 des Wasserbeckens kann durch Befestigungsschellen 15 erfolgen, die an den Armaturen 2 bzw. an der Endarmatur 3 angreifen, wobei es sich versteht, dass die mit den Bohrungen 10 versehenen Armaturen 2 durch entsprechende Rohr- oder Anschlusstücke untereinander bzw. mit der Sammelleitung 13 zu verbinden sind.

Auch bei der Querschnittsgestaltung gemäss Fig. 6 wird ein schlanker, aufrecht stehender Körper für den Stützkörper 1 benutzt, jedoch weist er beidseitig geringfügig konkave Seitenflächen 1' und am oberen und unteren Ende Abrundungen 1'' auf. Die beiden Hohlräume 16 werden vorzugsweise geflutet, um einen unnötigen Auftrieb auszuschalten. Diese Querschnittsgestaltung hat den Vorteil einer gesteigerten mechanischen Quersteifigkeit und gute Eigenschaften im Hinblick auf eine Verringerung des Luftdurchflußwidestandes. Dabei kann der Mantel 4 über seinen gesamten Umfang, ggfs. aber auch nur im Bereich der Seitenflächen 1' geschlitzt sein. Die konkave Formgebung kann ggfs. auch nur einseitig vorgesehen werden.

Aufgrund der unterschiedlichen Querschnittsformen der Armaturen 1, 2 einerseits und des Stützkörpers 1 ist es vorteilhaft, die dabei gegebene Stufung durch eine besonders geformte Unterlage 17 für den Mantel 4 auszuschalten, um so unzulässige Dehnungen des Mantels 4 (in den Fig. 7 - 9 nicht dargestellt) auszuschliessen. Diese Unterlage, die ein fester Bestandteil der Armaturen 1, 2, aber auch lösbar mit diesen verbunden sein kann, geht praktisch stufenlos von der zylindrischen Mantelfläche der Armaturen 1, 2 in die Seitenflächen des Stützkörpers 1 über. Der dem Stützkörper 1 zugekehrte Teil der Unterlage weist zudem zwei Ausnehmungen 18 auf, um eine Luftzufuhr unter den Mantel 4 über die Bohrung 10 sicherzustellen. Wenn die Unterlage 17 mit den Armaturen 1, 2 fest verbunden ist, können die Enden des Stützkörpers 1 ohne weiteres in die Armaturen 1, 2 eingeschoben und im übrigen ggfs. fixiert werden.

## Patentansprüche

1. Langgestreckte Vorrichtung zum fein- und grobblasigen Belüften von Wasser mit einem sich im wesentlichen über die Länge der Vorrichtung erstreckenden Stützkörper für einen diesen eng umschliessenden, aus Gummi oder gummiähnlichen Kunststoffen bestehenden, schlauchförmigen Mantel mit unter der Wirkung vorgespannter Luft sich öffnenden Schlitzen in grosser Anzahl, die über den Umfang des Mantels verteilt sind, wobei der Mantel an an den Enden der Vorrichtung befindlichen Armaturen befestigt ist, **dadurch gekennzeichnet, dass** ein Stützkörper (1) mit stark unterschiedlichen Seitenlängen (S1,S2)( bei einer Durchmesserbetrachtung ) mit zumindest im wesentlichen senkrecht angeordneten längeren Seiten (S2) vorgesehen ist.

2. Vorrichtung nach Anspruch 1, **dadurch gekennzeichnet, dass** der Stützkörper (1) einen zumindest in etwa flach rechteckigen Querschnitt aufweist.

3. Vorrichtung nach Anspruch 1 und 2, **dadurch gekennzeichnet, dass** das Verhältnis der Seitenlängen (S1,S2) etwa 1 : 3 bis 1 : 15, vorzugsweise 1 : 10, beträgt.

4. Vorrichtung nach Anspruch 1, **dadurch gekennzeichnet, dass** zwischen den Enden des Stützkörpers (1) und den an den Enden der Vorrichtung befindlichen Abschluss- und/oder Anschlussarmaturen (2,3) eine lösbare Steckverbindung vorgesehen ist.

5. Vorrichtung nach Anspruch 4, **dadurch gekennzeichnet, dass** die Enden (8) des Stützkörpers (1) mit einem Fortsatz begrenzt (8) in eine Vertiefung der Abschluss- und/oder Anschlussarmaturen (2,3) hineinragen und dort z.B. durch Eingriff in eine Nut (7) gegen Verdrehen gesichert sind.

6. Vorrichtung nach Anspruch 4, **dadurch gekennzeichnet, dass** die Steckverbindung durch eine Klemmung der auf den an den Enden der Vorrichtung befindlichen Armaturen (2,3) gehaltenen Enden des Mantels (4) gegen Lösen gesichert ist.

7. Vorrichtung nach Anspruch 1, **dadurch gekennzeichnet, dass** zwei oder mehrere Vorrichtungen zu einem Strang zusammengesetzt sind und Verankerungsmittel (15) für diesen Strang an den an den Enden der Vorrichtung befindlichen Armaturen (2,3) angreifen (Fig.5).

8. Vorrichtung nach Anspruch 1, **dadurch gekennzeichnet, dass** der Umfang der an den Enden der Vorrichtung befindlichen Armaturen (2,3) einerseits und die Summe aller Seitenlängen (S1,S2) des Stützkörpers (1) andererseits einander entsprechen.

9. Vorrichtung nach Anspruch 1, **dadurch gekennzeichnet, dass** die Seitenflächen (1') des Stützkörpers (1) ein- oder beiseitig schwach konkav geformt sind, der ggfs. flutbare Hohlräume (16) aufweist.

10. Vorrichtung nach Anspruch 1, **dadurch gekennzeichnet, dass** zwischen den Anschluss- und/oder Abschlussarmaturen 1,2) einerseits und dem Stützkörper (1) andererseits eine zur Auflage des Mantels (4) dienende feste bzw. starre Unterlage (17) vorgesehen ist, die praktisch stufenlos von der Umfangsfläche der Armaturen in die Seitenflächen des Stützkörpers (1) übergeht und zumindest eine Durchbrechung (18) für die Luftzufuhr aufweist.
